# EUROPEAN PATENT APPLICATION

(11) **EP 3 608 523 A1**
(43) Date of publication of application: **12.02.2020**
(21) Application number: 18188182.2
(22) Date of filing: 09.08.2018
(51) Int. Cl.: F02B 75/04, F02B 75/22, F16C 3/06, F16C 3/28

(54) **AN ECCENTRIC MEMBER AND A V-TYPE INTERNAL COMBUSTION ENGINE**

(71) Applicant: Gomecsys B.V., 1411 AR Naarden (NL)
(72) Inventor: De Gooijer, Lambertus Hendrik, 1401 EP Bussum (NL)
(74) Representative: De Vries & Metman

(57) **Abstract**

An eccentric member (8) for a system for varying compression ratio of an internal combustion engine (1) comprises two circumferential bearing portions (10, 11) for bearing respective big ends (4) of connecting rods (3) of a V-type internal combustion engine (1). The bearing portions (10, 11) are eccentric with respect to an inner surface (12) of the eccentric member (8) and located at a distance from each other in axial direction of the eccentric member (8). The eccentric member (8) also comprises two external gears (13, 14) between which the bearing portions (10, 11) are located. The eccentric member (8) is made of two half-sleeves (9a, 9b) which are fixed to each other at least between the bearing portions (10, 11).

## Description

The present invention relates to an eccentric member for a system for varying compression ratio of an internal combustion engine.

An eccentric member as described above is known from WO 2016/181046. The known eccentric member is applicable to an inline internal combustion engine in which the eccentric member is mounted on a single crankpin and supports a single connecting rod.

An object of the invention is to provide an eccentric member for a V-type engine.

This object is accomplished with the eccentric member according to the invention, wherein the eccentric member comprises two circumferential bearing portions for bearing respective big ends of connecting rods of a V-type internal combustion engine, which bearing portions are eccentric with respect to an inner surface of the eccentric member and located at a distance from each other in axial direction of the eccentric member, and two external gears between which the bearing portions are located, wherein the eccentric member is made of two half-sleeves which are fixed to each other at least between the bearing portions.

Existing V-type internal combustion engines may have two separate connecting rods which are mounted on a single crankpin of the crankshaft. In that case the corresponding cylinders are slightly staggered in longitudinal direction of the crankshaft and the connecting rods are located close to each other in order to have a compact engine block. If it is desired to design an engine including variable compression ratio on the basis of such engine block the eccentric member must support two separate connecting rods. An advantage of the present invention is that the distance between the bearing portions of the eccentric member provides room to fix the half-sleeves to each other, resulting in a strong eccentric member. Compared to an engine having the same engine block but without the eccentric member the thickness of the connecting rods as seen in longitudinal direction of the crankshaft may be smaller. In a particular case the thickness of each connecting rod is smaller at both sides of the centreline of the connecting rod, as seen in longitudinal direction of the crankshaft, with respect to a connecting rod of an engine having the same engine block but without the eccentric member. This provides room for the external gears, on the one hand, and for fixation means between the bearing portions of the eccentric member, on the other hand, whereas the centrelines of the connecting rods are at substantially the same location as in case of an engine having the same engine block but without the eccentric member.

The half-sleeves may be fixed to each other between the bearing portions through bolts, which bolts can extend in tangential direction of the eccentric member.

In a preferred embodiment the eccentric member comprises a flange between the bearing portions, since this provides additional room for receiving the bolts. Besides, when the eccentric member is applied in an engine the connecting rods are separated by the flange, hence avoiding direct contact between them.

In a practical embodiment the positions of maximum eccentricity of the respective bearing portions are shifted with respect to each other in rotational direction about a centreline of the inner surface of the eccentric member. This means that when the eccentric member is mounted in an engine each of the corresponding pistons may follow a similar path in its cylinder in dependency of the rotational position of the crankshaft. This also means that the connecting rods not only rotate with respect to each other about the centreline of the inner surface of the eccentric member, but also shift with respect to each other in radial direction of the centreline. In case of the presence of the flange between the bearing portions the connecting rods do not slide along each other, as described hereinbefore.

The two half-sleeves may be separated at a plane which substantially forms a mirror plane of the positions of maximum eccentricity or a plane perpendicular thereto, preferably by means of a split fracture. An advantage of the mentioned location is that both bearing portions are divided at a location at greatest angular distance from their minimum radial thicknesses at the respective bearing portions such that the minimum radial thickness of the eccentric member at the location of separation is as large as possible. Typically, at a relatively large shortest angular distance between the positions of maximum eccentricity, for example larger than 90° such as 135°, the two half-sleeves may be separated at the mirror plane, whereas at a relatively small shortest angular distance between the positions of maximum eccentricity, for example smaller than 90° such as 45°, the two half-sleeves may be separated at a plane extending perpendicularly to the mirror plane. The angular distance between the positions of maximum eccentricity, depends on ignition timing of an engine in which the eccentric member is applied.

Preferably, the two half-sleeves are also fixed to each other at the external gears in order to obtain a rigid unit of the half-sleeves.

When the external gears are located at opposite ends of the eccentric member the two half-sleeves may be fixed by I-shaped locking elements which are inserted in axial direction of the gears in respective cavities, wherein each cavity is partially realized in each half-sleeve.

In order to create proper lubrication conditions, in a particular embodiment each of the bearing portions is provided with a first aperture and the inner surface is provided with two second apertures at an angular distance from each other about a centreline of the inner surface at a location between the bearing portions, wherein the first apertures communicate with the respective second apertures via respective oil channels. This means that oil can flow from a central portion of the inner surface via the respective oil channels to each of the bearing portions. The oil channels can be manufactured relatively simply by drilling holes in axial direction of the eccentric member from the respective opposite ends of the eccentric member to the location between the bearing portions, closing off the holes at the ends so as to form internal channels and drilling radial holes to the formed channels from the inner surface and from the bearing portions.

The invention is also related to a V-type internal combustion engine including variable compression ratio, comprising a crankshaft including a crankpin, two connecting rods including respective big ends and small ends, two pistons being rotatably connected to the respective small ends, an eccentric member according to one of the preceding claims being rotatably mounted on the crankpin, wherein the eccentric member is drivably connected to an auxiliary shaft via a gear transmission, wherein the rotational position of the auxiliary shaft can be changed for varying the compression ratio. When the rotational position of the auxiliary shaft with respect to the engine block is stable the engine runs at fixed compression ratio.

The invention will hereafter be elucidated with reference to very schematic drawings showing an embodiment of the invention by way of example.
Fig. 1 is a perspective view of an embodiment of a V-type internal combustion according to the invention.
Fig. 2 is an enlarged perspective sectional view of a part of the engine of Fig. 1.
Fig. 3 is a perspective view of an embodiment of an eccentric member according to the invention.
Fig. 4 is a similar view as Fig. 3, but showing a cross-sectional view of the eccentric member.
Fig. 5 is a similar view as Fig. 3, but showing a sectional view of the eccentric member at an oil channel.
Fig. 6 is a diagram, illustrating the eccentricity of the eccentric member of Figs. 3-5.
Fig. 7 is a similar diagram as Fig. 6, but showing a different embodiment of the eccentric member.

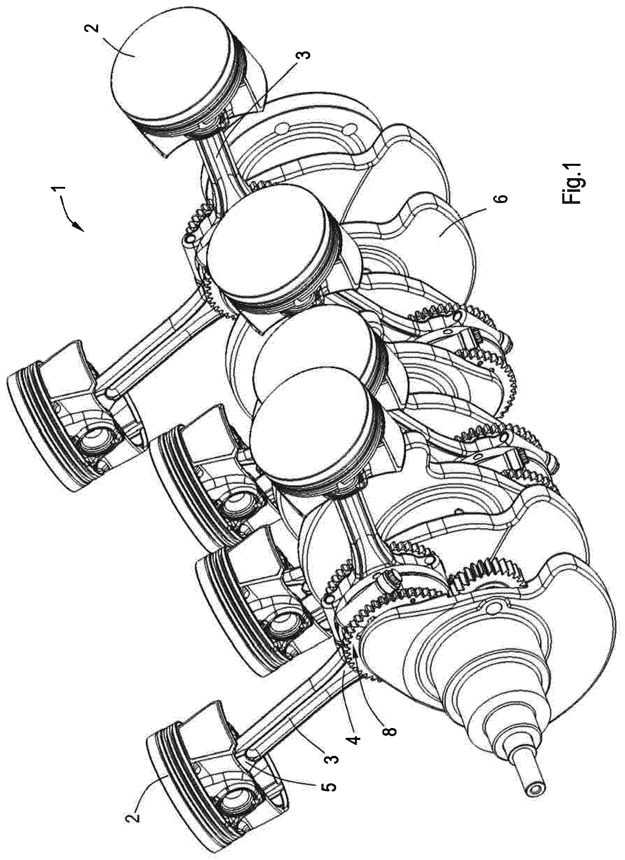

Fig. 1 shows an embodiment of a V-type internal
combustion engine 1 according to the invention. The engine has a variable compression ratio in order to achieve a high efficiency under part-load conditions. In the embodiment as shown in Fig. 1 the engine 1 comprises eight cylinders, but a different number of cylinders is conceivable. Fig. 1 shows that the engine 1 has eight pistons 2 and eight connecting rods 3, each including a big end 4 and a small end 5. Each piston 2 is rotatably connected to the small end 5 of one connecting rod 3.

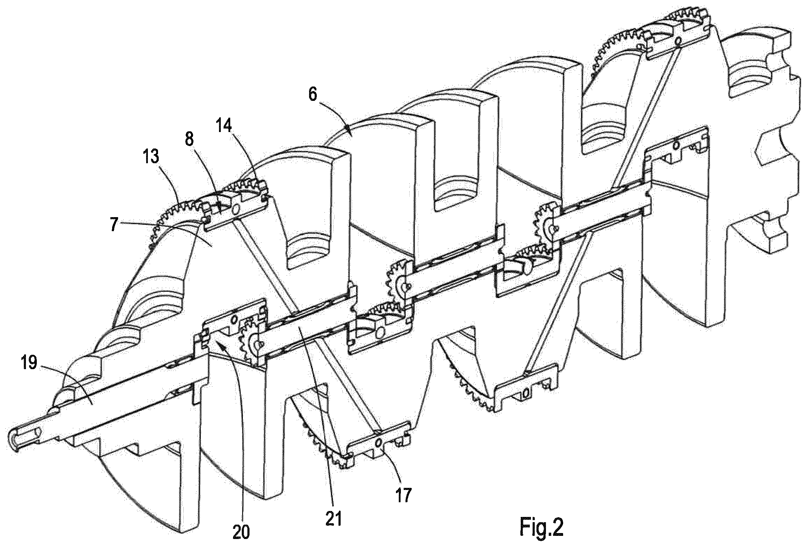

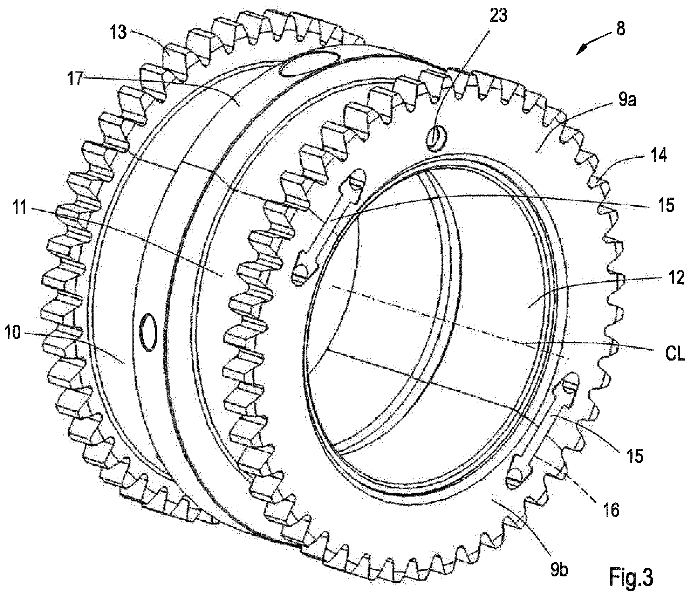

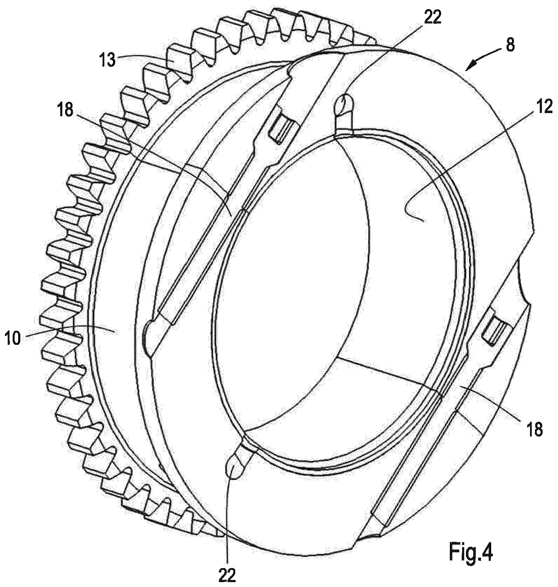

The engine 1 is also provided with a crankshaft 6 which is shown in greater detail in Fig. 2. The crankshaft 6 has four crankpins 7. Each crankpin 7 supports two connecting rods 3 through an eccentric member 8. Figs. 3 and 4 show an embodiment of the eccentric member 8 according to the invention, which embodiment is also applied in the internal combustion engine 1 as shown in Figs. 1 and 2.

The eccentric member 8 is made from two half-sleeves 9a, 9b that are assembled together. In assembled condition the eccentric member 8 comprises two circumferential bearing portions 10, 11 for bearing the respective big ends 4 of two corresponding connecting rods 3 of the engine 1. The bearing portions 10, 11 are eccentric with respect to an inner surface 12 of the eccentric member 8 and they are located at a distance from each other in axial direction of the eccentric member 8. The positions of maximum eccentricity of the respective bearing portions 10, 11 are shifted with respect to each other in rotational direction about a centreline CL of the inner surface 12 of the eccentric member 8. The eccentric members 8 fit on the respective crankpins 7 of the crankshaft 6.

Each of the eccentric members 8 also comprises two external gears 13, 14 which are located at opposite ends of the eccentric member 8. The bearing portions 10, 11 are located between the gears 13, 14.

In the embodiment as shown in Figs. 3 and 4 the two half-sleeves 9a, 9b are fixed to each other at three different locations as seen along the centreline CL. The two half-sleeves 9a, 9b are fixed to each other by two I-shaped locking elements 15 at each of the gears 13, 14. The I-shaped locking elements 15 are inserted in axial direction of the eccentric member 8 in respective cavities 16 at the gears 13, 14. Each cavity 16 is partially realized in each half-sleeve 9a, 9b at a contact surface between the half-sleeves 9a, 9b.

The eccentric member 8 comprises a flange 17 between the bearing portions 10, 11, which provide sufficient material to apply holes in tangential direction of the eccentric member 8 for receiving cooperating bolts 18, see Fig. 4.

Fig. 2 shows that one of the external gears 13 of the eccentric member 8 which is located at a front side of the engine 1 is drivably coupled to an auxiliary shaft 19 via a gear transmission 20. The auxiliary shaft 19 extends concentrically through the crankshaft 6 and has a fixed position with respect to a crankcase (not shown) when the engine 1 runs at a fixed compression ratio. The compression ratio can be varied by changing the rotational position of the auxiliary shaft 19. The eccentric member 8 at the front side of the engine drives the other three eccentric members 8 through driving shafts 21 which extend concentrically through the crankshaft 6 between two neighbouring crankpins 7.

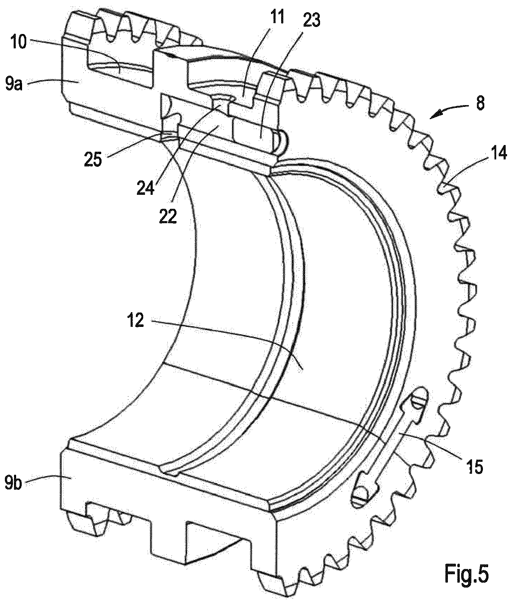

Fig. 5 shows a sectional view of the eccentric member 8 at an oil channel 22 which extends in axial direction of the eccentric member 8 between a front side of one of the external gears 14 and a location between the bearing portions 10, 11. The oil channel 22 is closed at the front side by a closure 23. The bearing portion 11 has a first aperture 24 and the inner surface 12 has a second aperture 25. The first and second apertures 24 communicate with each other through the oil channel 22 so as to allow oil to flow from the crankpin 7 to the bearing portion 11. Similarly, the other bearing portion 10 is also provided with another first aperture which communicates with another second aperture at another location between the bearing portions 10, 11 via another oil channel.

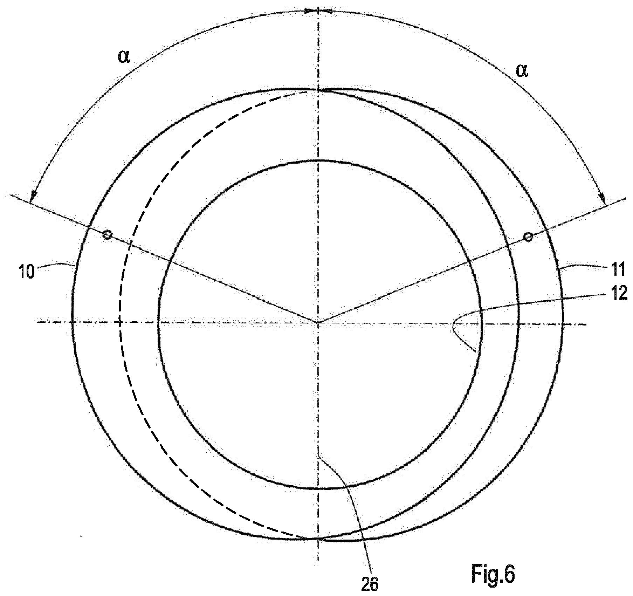

The eccentric member 8 can be manufactured as one piece and subsequently put into a machine that splits it in half by a split fracture. The mating surfaces of the two halves are jagged and sharp. When put back together, these jagged edges interlock perfectly causing an extremely strong connection. The eccentric member 8 as shown in Figs. 1-5 has an ideal location of the split fracture, which is illustrated in Fig. 6. Fig. 6 shows cross-sections of the two bearing portions 10, 11 of the eccentric member 8 in a single diagram. Two small circles in the diagram indicate the positions of the respective maximum eccentricities with respect to the inner surface 12 of the eccentric member 8. The shortest angular distance 2α between the positions of maximum eccentricities is 135°. In the embodiment as illustrated in Fig. 6 the location of the split fracture, indicated by vertical line 26, lies in a plane in which the centreline CL of the inner surface 12 lies and which forms a mirror plane of the positions of maximum eccentricity. Fig. 6 shows that the angles α between the plane of the split fracture and each of the positions of maximum eccentricity of the respective bearing portions 10, 11 are equal.

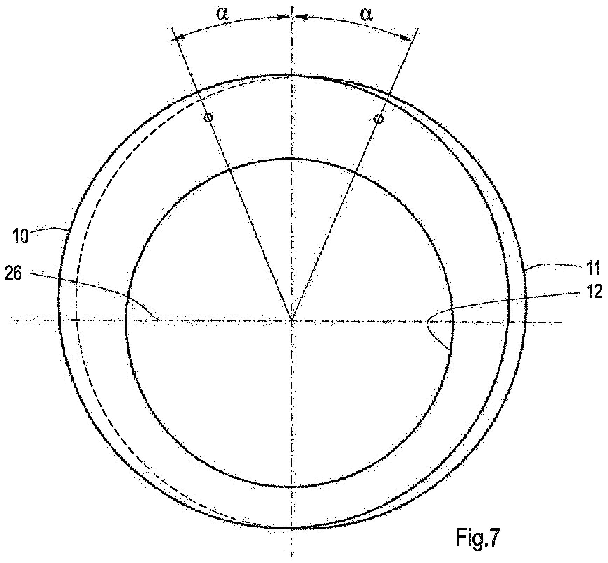

Fig. 7 shows an alternative embodiment of the eccentric member 8 which has a different location of the split fracture; in this case the shortest angular distance between the positions of maximum eccentricities 2α is 45°. Line 26 that indicates the plane of the split fracture extends horizontally. In the embodiment as shown in Fig. 7 the shortest angular distance between the positions of maximum eccentricity is smaller than in the embodiment as shown in Fig. 6. In the embodiment of Fig. 7 the plane of the split fracture is formed by a plane in which the centreline CL of the inner surface 12 lies and which extends perpendicular to the mirror plane of the positions of maximum eccentricity. In this case both bearing portions 10, 11 are divided at a location at greatest angular distance from their minimum radial thicknesses at the respective bearing portions 10, 11 such that the minimum radial thickness of the eccentric member 8 at the location of separation is as large as possible.

The invention is not limited to the embodiments shown in the drawings and described hereinbefore, which may be varied in different manners within the scope of the claims and their technical equivalents.

## Claims

1. An eccentric member (8) for a system for varying compression ratio of an internal combustion engine (1), comprising two circumferential bearing portions (10, 11) for bearing respective big ends (4) of connecting rods (3) of a V-type internal combustion engine (1), which bearing portions (10, 11) are eccentric with respect to an inner surface (12) of the eccentric member (8) and located at a distance from each other in axial direction of the eccentric member (8), and two external gears (13, 14) between which the bearing portions (10, 11) are located, wherein the eccentric member (8) is made of two half-sleeves (9a, 9b) which are fixed to each other at least between the bearing portions (10, 11).

2. An eccentric member (8) according to claim 1,
wherein the half-sleeves (9a, 9b) are fixed to each other between the bearing portions (10, 11) through bolts (18).

3. An eccentric member (8) according to claim 2,
wherein the bolts (18) extend in tangential direction of the eccentric member (8).

4. An eccentric member (8) according to one of the preceding claims, wherein the eccentric member (8) comprises a flange (17) between the bearing portions (10, 11).

5. An eccentric member (8) according to one of the preceding claims, wherein the positions of maximum eccentricity of the respective bearing portions (10, 11) are shifted with respect to each other in rotational direction about a centreline (CL) of the inner surface (12) of the eccentric member (8).

6. An eccentric member (8) according to one of the preceding claims, wherein said two half-sleeves (9a, 9b) are also fixed to each other at the external gears (13, 14).

7. An eccentric member (8) according to claim 6,
wherein the external gears (13, 14) are located at opposite ends of the eccentric member (8) and the two half-sleeves (9a, 9b) are fixed by I-shaped locking elements (15) which are inserted in axial direction of the gears (13, 14) in respective cavities (16), wherein each cavity (16) is partially realized in each half-sleeve (9a, 9b).

8. An eccentric member (8) according to one of the preceding claims, wherein each of the bearing portions (10, 11) is provided with a first aperture (24) and the inner surface (12) is provided with two second apertures (25) at an angular distance from each other about a centreline (CL) of the inner surface (12) at a location between the bearing portions (10, 11), wherein the first apertures (24) communicate with the respective second apertures (24) via respective oil channels (22) .

9. An eccentric member (8) according to one of the preceding claims and claim 5, wherein the two half-sleeves (9a, 9b) are separated at a plane which substantially forms a mirror plane (26) of the positions of maximum eccentricity or a plane perpendicular thereto.

10. A V-type internal combustion engine combustion engine (1) including variable compression ratio, comprising a crankshaft (6) including a crankpin (7), two connecting rods (3) including respective big ends (4) and small ends (5), two pistons (2) being rotatably connected to the respective small ends (4), an eccentric member (8) according to one of the preceding claims being rotatably mounted on the crankpin (7), wherein the eccentric member (8) is drivably connected to an auxiliary shaft (19) via a gear transmission (20), wherein the rotational position of the auxiliary shaft (19) can be changed for varying the compression ratio.
